# EUROPÄISCHE PATENTANMELDUNG

(11) **EP 3 696 833 A1**
(43) Veröffentlichungstag der Anmeldung: **19.08.2020**
(21) Anmeldenummer: 19156860.9
(22) Anmeldetag: 13.02.2019
(51) Int. Cl.: H01F 41/12, H02K 15/04

(54) **VERFAHREN ZUR HERSTELLUNG EINER SPULE**

(71) Anmelder: Siemens Aktiengesellschaft, 80333 München (DE)
(72) Erfinder: Schwaben, Markus, 97618 Hohenroth-Leutershausen (DE); Seufert, Reiner, 97616 Salz (DE); Vollmer, Rolf, 36129 Gersfeld (DE)

(57) **Zusammenfassung**

Die Erfindung betrifft ein Verfahren zur Herstellung einer Spule, insbesondere für einen Stator einer dynamoelektrischen rotatorischen Maschine, wobei ein elektrisch leitfähiger Bereich mit einem ersten additiven Verfahren gebildet wird, wobei der elektrisch leitfähige Bereich in Windungen um eine Windungsachse ausgebildet wird, wobei ein isolierender Bereich zur Isolation zweier benachbarter Windungen gegeneinander mit einem zweiten additiven Verfahren ausgebildet wird sowie eine auf diese Weise hergestellte Spule.

## Beschreibung

Die Erfindung betrifft ein Verfahren zur Herstellung einer Spule.

In rotatorischen dynamoelektrischen Maschinen sind zur Erzeugung von Magnetfeldern gewickelte stromdurchflossene Leiter, auch Spulen genannt, notwendig. Hierzu wird meist ein isolierter Draht, z. B. Lackdraht, verwendet der mit einer hohen Windungszahl und/oder mit einer hohen Anzahl an parallelen Drähten gewickelt wird. Durch die meist runde Form des Drahtes und die Wickeltechnik wird ein in einer Nut zur Verfügung stehender Platz nicht optimal ausgenutzt. Zudem ist durch entstehende Zwickel zwischen den Drähten der thermische Leitwert nicht optimal.

Ferner können Spulen auch gegossen werden. Dies ist jedoch einerseits aufwändig, andererseits können hierbei Qualitätsprobleme, insbesondere durch Lunker, auftreten. Zudem muss eine Isolation nachträglich aufgebracht werden.

Der Erfindung liegt die Aufgabe zugrunde, eine Spule für einen Stator herzustellen, wobei der Platz in Nuten optimal ausgeschöpft werden soll und eine hohe Qualität der Spule gewährleistet werden soll.

Die Lösung der Aufgabe gelingt nach einem Verfahren gemäß Anspruch 1, durch ein Verfahren zur Herstellung einer Spule, insbesondere für einen Stator einer dynamoelektrischen rotatorischen Maschine, wobei ein elektrisch leitfähiger Bereich mit einem ersten additiven Verfahren gebildet wird, wobei der elektrisch leitfähige Bereich in Windungen um eine Windungsachse ausgebildet wird, wobei ein isolierender Bereich zur Isolation zweier benachbarter Windungen gegeneinander mit einem zweiten additiven Verfahren ausgebildet wird.

Ferner gelingt die Lösung der Aufgabe durch eine Spule, insbesondere für einen Stator einer dynamoelektrischen rotatorischen Maschine, hergestellt nach einem derartigen Verfahren.

Ferner gelingt die Lösung der Aufgabe durch eine dynamoelektrische rotatorische Maschine, aufweisend eine derartige Spule.

Der elektrisch leitfähige Bereich wird in Windungen um eine Windungsachse ausgebildet, das heißt in anderen Worten der elektrisch leitfähige Bereich wird sich um eine Windungsachse windend ausgebildet. Der elektrisch leitfähige Bereich kann hierbei in einem festen Radius um die Windungsachse ausgebildet werden. Auf diese Weise kann aus der Vogelperspektive betrachtet eine runde Spule gebildet werden.

Vorteilhaft ist jedoch die Bildung einer rechteckigen Spule. Hierbei wird der elektrisch leitfähige Bereich als rechteckige Windung um die Windungsachse ausgebildet.

Der isolierende Bereich wird vorzugsweise mit einem zweiten additiven Verfahren ausgebildet, dass eine Windung gegenüber einer benachbarten Windung isoliert wird.

Der isolierende Bereich weist vorzugsweise die gleiche Form - aus der Vogelperspektive betrachtet - wie der elektrisch leitfähige Bereich auf.

Der elektrisch leitfähige und auch der isolierende Bereich weisen vorzugsweise einen rechteckigen Querschnitt auf.

Auf diese Weise wird der Platz in den Nuten optimal ausgefüllt.

In einer vorteilhaften Ausführungsform der Erfindung werden der elektrisch leitfähige Bereich und der isolierende Bereich stoffschlüssig verbunden.

Dies gelingt, da der elektrisch leitfähige Bereich und der isolierende Bereich mit einem additiven Verfahren gebildet werden.

In einer weiteren vorteilhaften Ausführungsform der Erfindung ist das erste additive Verfahren ein Coldspray-Verfahren.

Vorzugsweise wird beim Coldspray-Verfahren Pulver mittels hoher kinetischer Energie direkt aufgetragen. Dies bietet den Vorteil, dass keine thermische Belastung auf ein Bauteil wirkt.

In einer weiteren vorteilhaften Ausführungsform der Erfindung ist das zweite additive Verfahren ein Hotspray-Verfahren.

Das Hotspray-Verfahren ist hierbei vorzugsweise ein Pulverauftragsverfahren. Das Pulver wird vorzugsweise vor dem Auftragen verflüssigt. Dies bietet den Vorteil, dass auch nicht duktile Materialien, z. B. Keramik, applizierbar sind.

Die Erfindung bietet den Vorteil, dass durch den Einsatz zweier additiver Herstellungsverfahren, dem Coldspray-Verfahren zur Bildung des elektrisch leitfähigen Bereichs und dem Hotspray-Verfahren für den isolierenden Bereich, sehr geringe Temperaturen auf das hergestellte Bauteil wirken bzw. hohe Temperaturen nur sehr kurz auf das Bauteil wirken. Dies hat den Vorteil, dass es zu keiner Diffusion der unterschiedlichen Materialien kommen kann, die unter anderem eine Reduktion der isolierenden Wirkung der Keramik zur Folge hätte.

Zudem kann eine Spule sehr schnell hergestellt werden.

Die Kombination der beiden genannten additiven Herstellungsverfahren verursacht eine nur geringe thermische Belastung für das hergestellte Bauteil. Es findet kaum Wärmeeintrag statt.

Ferner besteht die Möglichkeit, direkt auf einen Spulenkern aufzuspritzen was eine Herstellung von rotatorischen dynamoelektrischen Maschinen deutlich erleichtert und schneller macht. Zudem besteht die Möglichkeit, Kühlstrukturen und/oder Kühlkanäle in die Spulen zu integrieren.

Ferner besteht die Möglichkeit, Masken während des Sprayens vorzuschalten. Dies ermöglicht ein Aufsprühen von genauen und filigranen Strukturen.

In einer weiteren vorteilhaften Ausführungsform der Erfindung weist ein Material zur Bildung des elektrisch leitfähigen Bereichs Kupfer und/oder Aluminium oder deren Legierungen auf.

Als Material zur Bildung des elektrisch leitfähigen Bereichs sind auch andere elektrisch leitfähige Materialien geeignet, beispielsweise Silber.

Kupfer eignet sich als Material zur Bildung des elektrisch leitfähigen Bereichs besonders gut, wenn eine hohe Leitfähigkeit gewährleistet werden soll. Kupfer ist jedoch teuer. Aluminium weist hinsichtlich der elektrischen Leitfähigkeit schlechtere Eigenschaften auf als Kupfer, ist jedoch günstiger.

In einer weiteren vorteilhaften Ausführungsform der Erfindung weist ein Material zur Bildung des isolierenden Bereichs keramisches Material, insbesondere Aluminiumoxid, auf.

Weitere denkbare Materialien sind Oxidkeramik, Glas, Kunststoffe wie z. B. PEEK und Cermets.

In einer weiteren vorteilhaften Ausführungsform der Erfindung wird der isolierende Bereich zwischen zwei benachbarten Windungen ausgebildet.

Dies bedeutet, dass der isolierende Bereich an beispielsweise einer Oberseite einer ersten Windung und an eine Unterseite einer darüberliegenden zweiten Windung angrenzt. Auf diese Weise kann eine sehr kompakte Spule hergestellt werden.

In einer weiteren vorteilhaften Ausführungsform der Erfindung ist der isolierende Bereich dem elektrisch leitfähigen Bereich umgebend ausgebildet.

Dies bedeutet, dass der isolierende Bereich den in Windungen angeordneten elektrisch leitfähigen Bereich teilweise bzw. ganz umgibt. Umgibt der isolierende Bereich den elektrisch leitfähigen Bereich gänzlich, ist die gesamte Spule nach außen hin isoliert.

In einer weiteren vorteilhaften Ausführungsform der Erfindung werden ein erstes Verschaltungselement und ein zweites Element mit dem ersten additiven Verfahren gebildet, wobei das erste Verschaltungselement an einem Ende des elektrisch leitfähigen Bereichs angeordnet ist, wobei das zweite Verschaltungselement an einem anderen Ende des elektrisch leitfähigen Bereichs angeordnet wird.

Diese Verschaltungselemente weisen vorzugsweise keinen Kontakt mit isolierendem Material auf. Die Verschaltungselemente dienen einer Verschaltung mehrerer Spulen zu einer Wicklung, insbesondere Statorwicklung.

Die Erfindung ist jedoch auch für eine Rotorwicklung geeignet.

In einer weiteren vorteilhaften Ausführungsform der Erfindung wird wenigstens ein Kanal im elektrisch leitfähigen Bereich gebildet.

Vorzugsweise wird zur Bildung des Kanals eine Maske verwendet, welche zwischen einer Aufsprüheinheit und einer Grundfläche, welche als Grundlage für die Windung dient, gehalten wird. Andererseits kann der Kanal auch mittels eines subtraktiven Verfahrens gebildet werden, beispielsweise Fräsen.

In einer weiteren vorteilhaften Ausführungsform der Erfindung wird der Kanal mit einem subtraktiven Verfahren gebildet, wobei der Kanal mit einem löslichen Material gefüllt wird.

Das lösliche Material ist vorzugsweise wasserlöslich. Das lösliche Material kann jedoch auch durch andere Flüssigkeiten, beispielsweise Lauge, gelöst werden.

In anderen Worten: Der elektrische Bereich wird gebildet und vorzugsweise kurz nach der Bildung wird wenigstens ein Kanal gefräst. Dies erfolgt vorteilhaft während des Verfahrens. Der Kanal wird mit einem löslichen Material gefüllt. Vorzugsweise nach Fertigstellung wird das lösliche Material gelöst bzw. ausgespült.

Der Kanal dient vorzugsweise einer Durchströmung des elektrisch leitfähigen Bereichs mit Kühlflüssigkeit während des Betriebs der Spule.

Jedoch kann der Kanal auch von Luft und anderen Gasen zur Kühlung durchströmt werden.

In einer weiteren vorteilhaften Ausführungsform der Erfindung wird in Richtung der Windungsachse betrachtet eine Windung pro Lage gebildet.

In einer weiteren vorteilhaften Ausführungsform der Erfindung wird eine Schichtdicke des elektrisch leitfähigen Bereichs gebildet, welche zwischen 0,5 mm und 5 mm liegt.

In einer weiteren vorteilhaften Ausführungsform der Erfindung wird in Richtung der Windungsachse betrachtet der isolierende Bereich derart ausgebildet, dass eine Beabstandung zwischen zwei Windungen in einen Bereich von 20 µm bis 100 µm liegt.

Dies gewährleistet eine gute Isolation zweier Windungen.

Im Folgenden wird die Erfindung anhand der in den Figuren dargestellten Ausführungsbeispiele näher beschrieben und erläutert. Es zeigen:
- FIG 1: ein erfindungsgemäßes Verfahren zur Herstellung einer Spule,
- FIG 2: eine Spule die durch das erfindungsgemäße Verfahren gebildet ist,
- FIG 3: eine Vorrichtung zur Durchführung des erfindungsgemäßen Verfahrens,
- FIG 4: einen ersten möglichen Querschnitt der Spule,
- FIG 5: einen zweiten möglichen Querschnitt der Spule,
- FIG 6: einen dritten möglichen Querschnitt der Spule,
- FIG 7: einen vierten möglichen Querschnitt durch die Spule mit zusätzlichen Kühlkanälen.

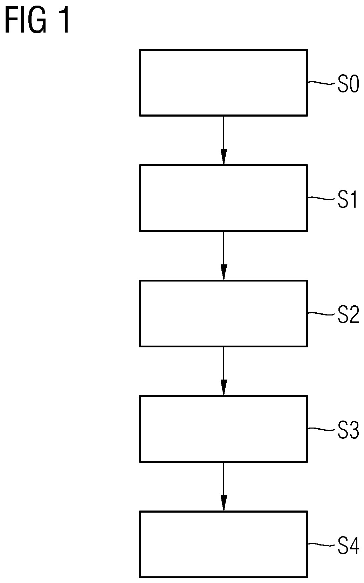

FIG 1 zeigt ein erfindungsgemäßes Verfahren zur Herstellung einer Spule 1.

Das Verfahren startet in einem Verfahrensschritt S0. In diesem Verfahrensschritt S0 können z. B. die Angaben zu beispielsweise Dicke und Abstand der Spule an eine (nicht dargestellte) Düsensteuerung übergeben werden.

In einem Verfahrensschritt S1 erfolgt die Bildung eines elektrisch leitfähigen Bereichs durch die erste Düse 1.

In einem Verfahrensschritt S2 erfolgt das Nachführen der zweiten Düse 2 zur Bildung des isolierenden Bereichs.

Vorzugsweise fährt die zweite Düse 2 den gleichen Weg ab wie die erste Düse 1. Der abgefahrene Weg weist vorzugsweise die Form einer Spirale, insbesondere einer eckigen Spirale, auf. Der Weg windet sich vorzugsweise um eine Windungsachse.

In einem Verfahrensschritt S3 wird als oberste Schicht der Spule eine Schicht mit elektrisch leitfähigem Material gebildet.

In einem Verfahrensschritt S4 wird die Spule 1 fertiggestellt.

Die Abläufe in den Verfahrensschritten können auch getauscht werden: In einem Verfahrensschritt S1 erfolgt dann die Bildung eines isolierenden Bereichs durch die erste Düse 1, in einem Verfahrensschritt S2 erfolgt das Nachführen der zweiten Düse 2 zur Bildung des elektrisch leitfähigen Bereichs und in einem Verfahrensschritt S3 wird als oberste Schicht der Spule eine Schicht mit isolierendem Material gebildet.

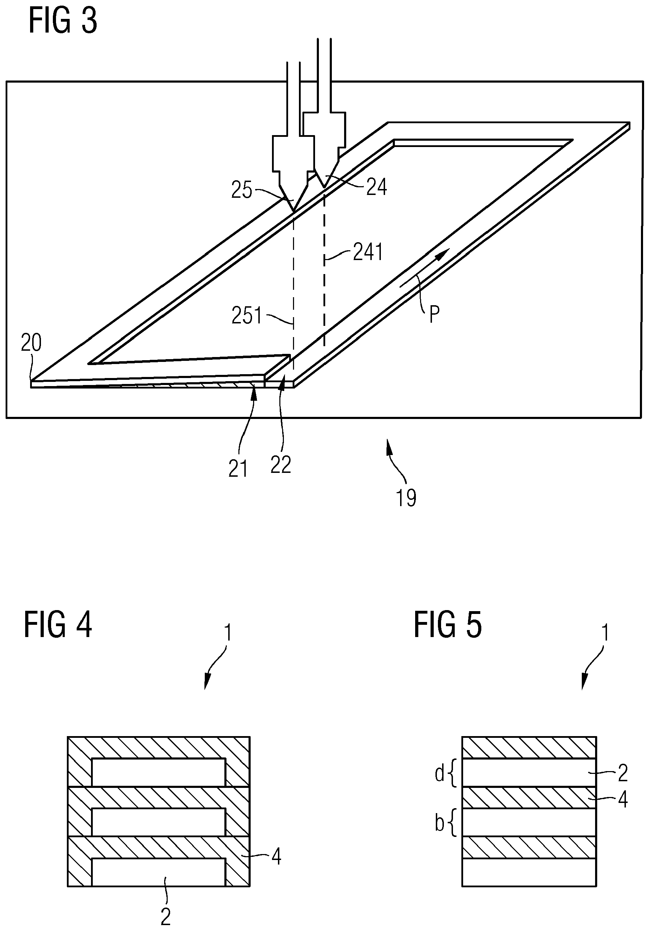

Weitere Aufbauvariationen sind in den FIG 4 bis 7 gezeigt.

Der Aufbau der ersten und zweiten Düsen 1, 2 zueinander ist in FIG 3 dargestellt.

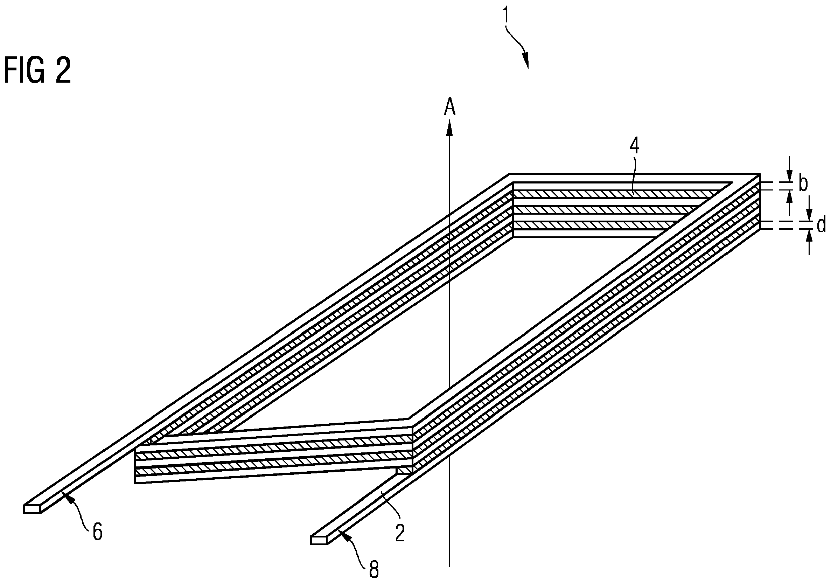

FIG 2 zeigt eine Spule 1 die durch das erfindungsgemäße Verfahren gebildet ist.

Die FIG 2 zeigt die Spule 1, aufweisend einen elektrisch leitfähigen Bereich 2 und einen isolierenden Bereich 4, wobei der isolierende Bereich 4 zwischen zwei Windungen des elektrisch leitfähigen Bereichs 2 liegt.

Der elektrisch leitfähige Bereich 2 weist eine Dicke d auf und ist durch den isolierenden Bereich mit der Dicke b zu einer weiteren Windung des elektrisch leitfähigen Bereichs 2 beabstandet angeordnet.

Die Windungen sind um eine Windungsachse A ausgebildet. Die FIG 2 zeigt ferner ein erstes Verschaltungselement 6 und ein zweites Verschaltungselement 8, welche einer Verschaltung, vorzugsweise mit einer weiteren derartigen Spule, dienen, um vorzugsweise eine Statorwicklung zu erhalten.

FIG 3 zeigt eine Vorrichtung 19 zur Durchführung des erfindungsgemäßen Verfahrens.

Die Vorrichtung 19 umfasst einen Startblock 22 sowie eine Rampe 21 und vorzugsweise eine Grundplatte 20 aus Substrat.

Die FIG 3 zeigt ferner eine erste Düse 24 und eine zweite Düse 25, mit einem ersten Sprühstrahl 241 der ersten Düse 24 und einen zweiten Sprühstrahl 251 der zweiten Düse 25. Diese Vorrichtung wird vorzugsweise von den beiden Düsen 24, 25 abgefahren. Dies zeigt der Pfeil P in der FIG 3.

Ferner ist es auch möglich, dass die Düsen 24, 25 feststehende Düsen sind und die Grundplatte unter den Düsen bewegt wird.

Vorzugsweise sind die Düsen 24, 25 derart angeordnet, dass die zweite Düse 25 der ersten Düse 24 unmittelbar nachgeführt wird.

Um keine harten Übergänge von der ersten Windung auf die zweite Windung zu haben, ist die Rampe 21 vorteilhaft durch die Windung leicht angehoben, wodurch es nicht zu einem abrupten Anstieg kommt.

FIG 4 zeigt einen ersten möglichen Querschnitt der Spule 1. Hierbei ist der elektrisch leitfähige Bereich 2 sowohl links als auch rechts und oben von isolierendem Material umgeben.

FIG 5 zeigt einen zweiten möglichen Querschnitt der Spule 1. In der FIG 5 zeigt sich die abwechselnde Anordnung von elektrisch leitfähigem Bereich 2 und isolierendem Bereich 4.

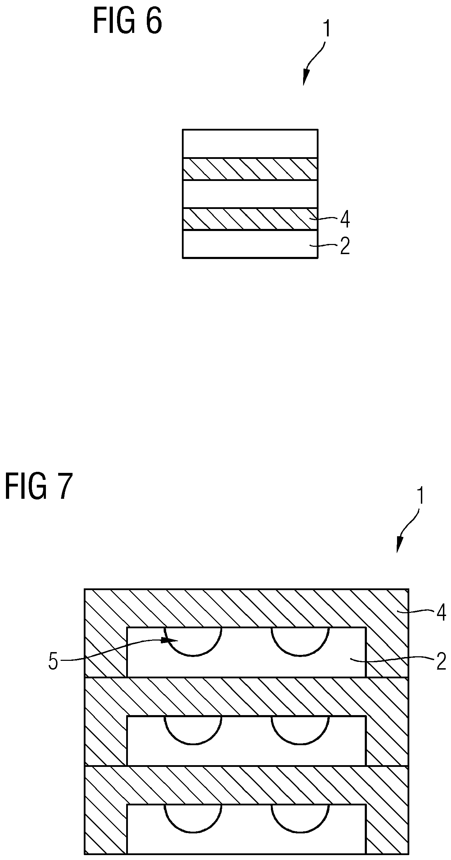

FIG 6 zeigt einen dritten möglichen Querschnitt der Spule 1. In der FIG 6 sind an einem oberen und an einem unteren Ende isolierende Bereiche angeordnet.

FIG 7 zeigt einen vierten Querschnitt durch die Spule 1 mit zusätzlichen Kühlkanälen 5. Die Kühlkanäle 5 können durch ein subtraktives Verfahren gebildet werden, wie auch durch vorgeschaltete Masken während des Sprayens.

## Patentansprüche

1. Verfahren zur Herstellung einer Spule, insbesondere für einen Stator einer dynamoelektrischen rotatorischen Maschine, wobei ein elektrisch leitfähiger Bereich mit einem ersten additiven Verfahren gebildet wird, wobei der elektrisch leitfähige Bereich in Windungen um eine Windungsachse ausgebildet wird, wobei ein isolierender Bereich zur Isolation zweier benachbarter Windungen gegeneinander mit einem zweiten additiven Verfahren ausgebildet wird.

2. Verfahren nach Anspruch 1, wobei der elektrisch leitfähige Bereich und der isolierende Bereich stoffschlüssig verbunden werden.

3. Verfahren nach einem der vorhergehenden Ansprüche, wobei das erste additive Verfahren ein Coldspray-Verfahren ist.

4. Verfahren nach einem der vorhergehenden Ansprüche, wobei das zweite additive Verfahren ein Hotspray-Verfahren ist.

5. Verfahren nach einem der vorhergehenden Ansprüche, wobei ein Material zur Bildung des elektrisch leitfähigen Bereichs Kupfer und/oder Aluminium oder deren Legierungen aufweist.

6. Verfahren nach einem der vorhergehenden Ansprüche, wobei ein Material zur Bildung des isolierenden Bereichs keramisches Material, insbesondere Aluminiumoxid, aufweist.

7. Verfahren nach einem der vorhergehen Ansprüche, wobei der isolierende Bereich zwischen zwei benachbarten Windungen ausgebildet wird.

8. Verfahren nach einem der vorhergehenden Ansprüche, wobei der isolierende Bereich den elektrisch leitfähigen Bereich umgebend ausgebildet wird.

9. Verfahren nach einem der vorhergehenden Ansprüche, wobei ein erstes Verschaltungselement und ein zweites Verschaltungselement mit dem ersten additiven Verfahren gebildet werden, wobei das erste Verschaltungselement an einem Ende des elektrisch leitfähigen Bereichs angeordnet wird, wobei das zweite Verschaltungselement an einem anderen Ende des elektrisch leitfähigen Bereichs angeordnet wird.

10. Verfahren nach einem der vorhergehenden Ansprüche, wobei wenigstens ein Kanal im elektrisch leitfähigen Bereich gebildet wird.

11. Verfahren nach Anspruch 10, wobei der Kanal mit einem subtraktiven Verfahren gebildet wird, wobei der Kanal mit einem löslichen Material gefüllt wird.

12. Verfahren nach einem der vorhergehenden Ansprüche, wobei in Richtung der Windungsachse betrachtet eine Windung pro Lage gebildet wird.

13. Verfahren nach einem der vorhergehenden Ansprüche, wobei eine Schichtdicke des elektrisch leitfähigen Bereichs gebildet wird, welche zwischen 0,5 mm und 5 mm liegt.

14. Verfahren nach einem der vorhergehenden Ansprüche, wobei in Richtung der Windungsachse betrachtet der isolierende Bereich derart ausgebildet wird, dass eine Beabstandung zwischen zwei Windungen in einem Bereich von 20 µm bis 100 µm liegt.

15. Spule, insbesondere für einen Stator einer dynamoelektrischen rotatorischen Maschine, hergestellt nach einem Verfahren nach einem der Ansprüche 1 bis 14.

16. Dynamoelektrische rotatorische Maschine, aufweisend eine Spule nach Anspruch 15.
